# EUROPEAN PATENT APPLICATION

(11) **EP 1 241 770 A1**
(43) Date of publication of application: **18.09.2002**
(21) Application number: 01200983.3
(22) Date of filing: 16.03.2001
(51) Int. Cl.: H02K 5/22, H02P 1/02

(54) **Permanent magnet motor with microprocessor control**

(71) Applicant: Logos S.r.l., 43100 Parma (IT)
(72) Inventor: Michelotti, Luca, 43100 Parma (IT); Dell'Acqua, Lucio, 43100 Parma (IT)
(74) Representative: Zanardo, Giovanni

(57) **Abstract**

Permanent magnet motor with microprocessor circuit (30). The microprocessor circuit (30) manages a sequence of command signals to be sent to the stator coils of the motor.

## Description

The present invention relates to a sequential magnetic field actuation device.

In its more general meaning, an actuation device or actuator is a device capable of performing a task using electric or hydraulic energy as primary source; more in particular, it usually comprises an alternate or direct current electric motor at a high number of revolutions so as to minimise its overall dimensions, a high reduction-ratio gear unit, and an output mobile member provided with rotatory motion (rotative actuator) and/or with linear motion (linear actuator).

Traditional actuators usually use "brushless" motors, or stepping motors.

Actually, to eliminate the need of the mechanical switching, in the so-called brushless direct current motors the switching is currently obtained with electronic means; in said motors, the rotor consists of a permanent magnet, whereas the stator has a multiphase winding, and each phase is supplied in direct current in succession through suitable switches, such as transistors or thyristors, which are opened or closed according to the angular position of the rotor by an electronic control circuit. In any case, for the purpose of detecting the angular position of the motor, it is necessary to provide for the presence of photoelectric cells or other transducers, often associated to Hall-effect sensors immersed in the rotor magnetic field.

Stepping motors are a particular variant of reluctance or "variable magnetic gap" synchronous three-phase motors; actually, they are motors having a magnetically polarised rotor, which start as asynchronous motors but operate as synchronous motors when at full speed operation. In particular, a stepping motor comprises a rotor made of a high magnetic permeability material, having a series of lobes, and a four-pole stator: by sending in a succession current pulses to the stator windings, as the rotor tends to set to the minimum reluctance position in the magnetic circuit, it carries out successive rotations whose width depends in an inversely proportional way on the number of lobes of the rotor and on the number of poles of the stator.

As a consequence, traditional actuators necessarily include moving parts which may cause wear and operating instability problems and thus, moderate electric efficiency, which would be desirable to increment.

Thus, purpose of the present invention is that of implementing a sequential magnetic field actuation device which should get round the disadvantages mentioned above, that is, an actuator operating without using brushes and without the presence of moving members (static system).

Another purpose of the present invention is that of implementing a sequential magnetic field actuation device which could be applied - both for rotatory movements and for linear movements - to any apparatus needing to be mechanically insulated from a motor energy source.

Further purpose of the present invention is that of implementing a sequential magnetic field actuation device at reasonable price and without using particularly difficult or expensive technologies.

Said purposes are obtained by a sequential magnetic field actuation device according to claim 1, to which reference shall be made for shortness.

Advantageously, the presence of a microprocessor card, which manages the times and the sequences of command signals to be sent to a plurality of coils magnetically connected to a permanent magnet external to the system allows having a continuous control over the absorbed current and on its variations, so as to continuously optimise its time and the power supplied between pitches.

In this way it is possible to avoid the need of checking - through external feedback sensors - the operating parameters of the entire actuator.

The actuation device according to the present invention can thus be connected to airtight systems mechanically separate from a motor energy source.

Moreover, the presence of the integrated microprocessor allows having different piloting methods from the outside, for example through a tension analogue signal, through a frequency command, -through a serial communication or through a digital command.

Finally, the fields of application of an actuation device according to the present invention are very varied, from cooling members (for example, cooling fans for vehicles) to rotary pumps, from linear peristaltic to small drives (for examples, rear window wipers), to industrial automation applications, such as micro-spindles.

Further features and advantages of the present invention will appear clearly from the following description and attached drawings, provided only by way of explicative and non-limitative example. In such drawings:

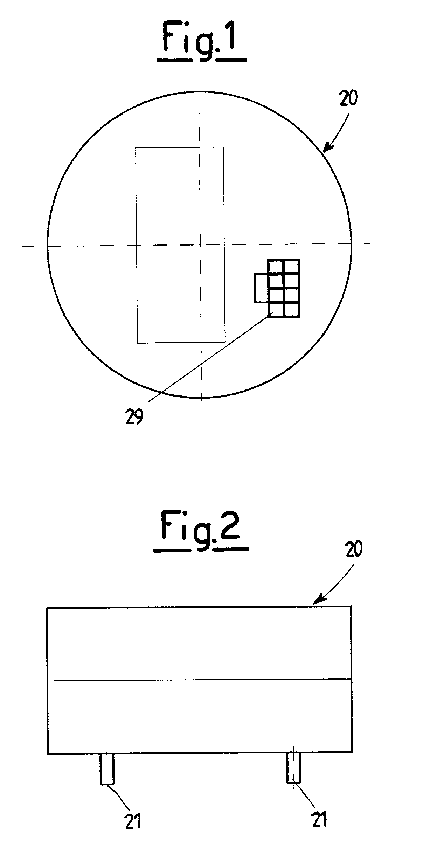

- Figure 1 shows a schematic top view of a sequential magnetic field actuation device according to the invention;
- Figure 2 shows a side view of the actuation device according to the invention;

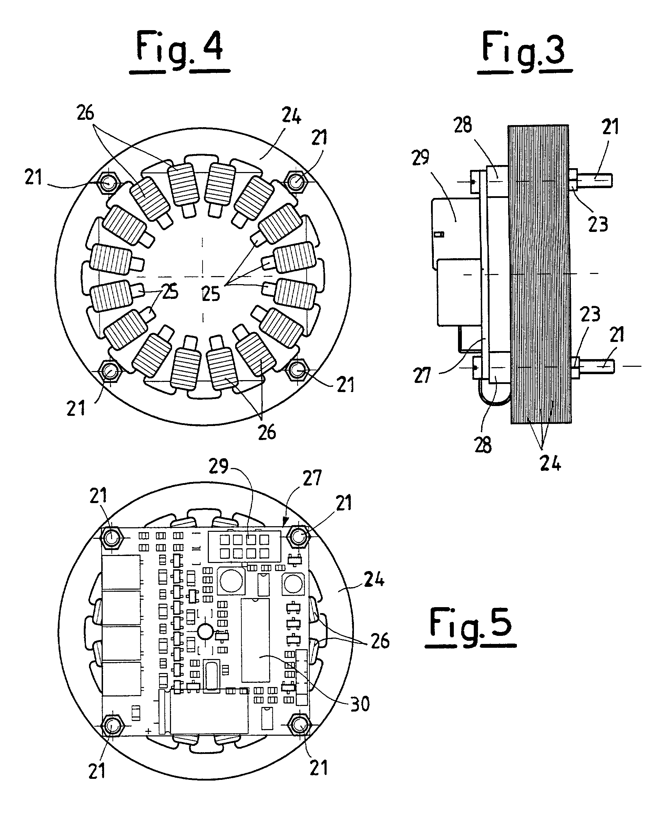

- Figure 3 shows a side view of the actuation device according to the invention, where the external case has been removed;
- Figure 4 shows a front view of a lamination used in the sequential magnetic field actuation device according to the invention;
- Figure 5 shows a front view of a lamination provided with microprocessor circuit card, which is used in the actuation device according to the present invention;

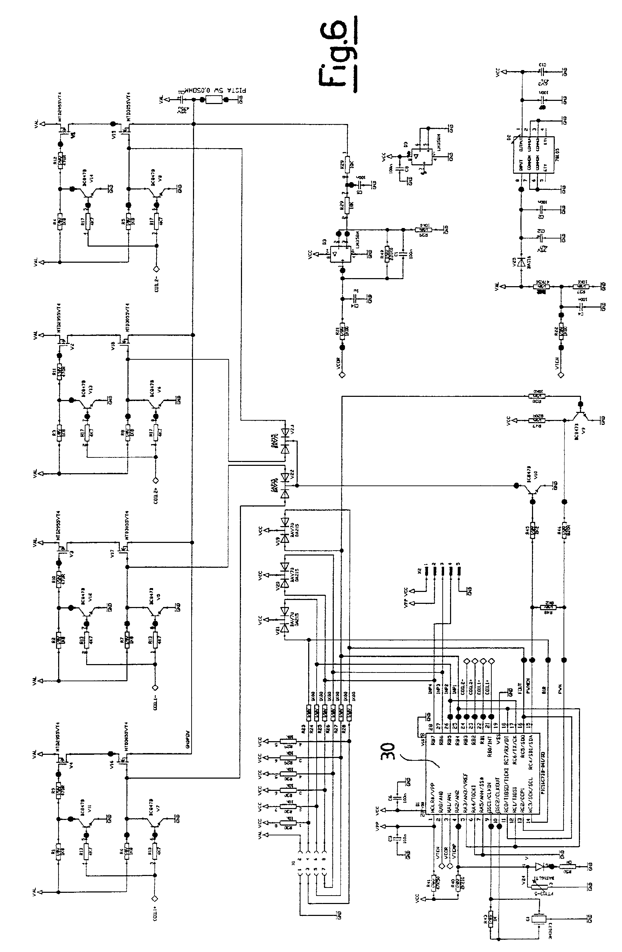

- Figure 6 shows the circuit wiring diagram of the card shown in figure 5;
- Figures 7A-7H schematically show the operating management sequences of the microprocessor circuit of figure 5;
- Figure 8 shows a block diagram of the management procedure shown in figures 7A-7H;
- Figure 9 shows a Cartesian diagram which shows the pattern of the pressure of a rotary geared pump, to which a sequential magnetic field actuation device according to the present invention is applied, in function of the absorbed current intensity, at a constant power supply voltage equal to 12 Volts;
- Figure 10 shows a Cartesian diagram which shows the pattern of the pressure of a rotary geared pump, to which a sequential magnetic field actuation device according to the present invention is applied, in function of the absorbed current intensity, at a constant power supply voltage equal to 24 Volts.

With reference to the above figures, reference numeral 20 indicates an insulating case or container of the actuation device according to the present invention, which is usually made in a single piece; normally, four fastening screws 21 are used, whose end portion protrudes from case 20 so as to lock each nut 23 in abutment on the bottom of a series of shaped laminations 24, which are arranged in parallel and packed with one another and which carry, on each end 25, a wound coil 26 for respectively connecting all the corresponding ends 25 of laminations 24.

In a preferred but non-limitative embodiment of the present invention, the packing of 35 laminations is provided, on which there is wound a total number of coils that is multiple of two (with a minimum number of four) and in particular, a number of coils equal to 8 for each magnetic circuit present in the device; furthermore, it is preferable to manufacture each coil by using 23 turns for 4 winding turns.

Coils 26 are magnetically coupled to a permanent magnet external to the device.

The fastening screws 21 lock a microprocessor electronic card 27 into a substantially parallel position with respect to that of laminations 24, through suitable spacers 28, whereas card 27 is provided with an electrical connection connector 29 (for example, a Molex Micro-fit 43045-0812), which is accessible from the outside through an aperture obtained on case 20; the connection pins of connector 29 typically are eight, and they are used for applying the device to actuators, such as rotary pumps, cooling members, linear peristaltic, small drives or industrial automation applications.

Thus the device according to the invention comprises a sequential magnetic field motor, without the use of brushes and without the presence of moving members, wherein a microprocessor 30 of the circuit card 29 sequentially manages coils 26 by suitably sending a series of current pulses according to a predetermined logic.

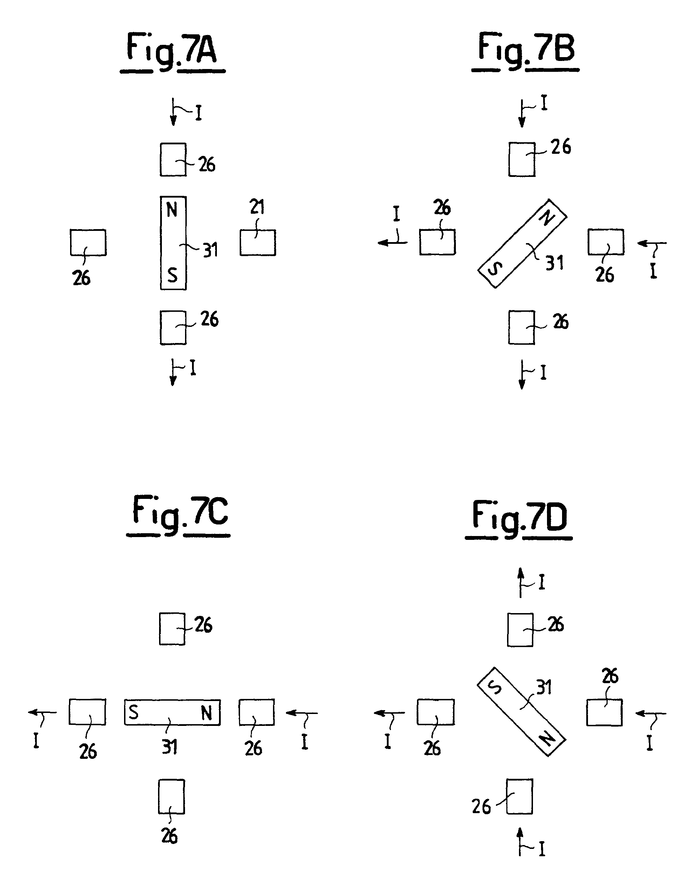

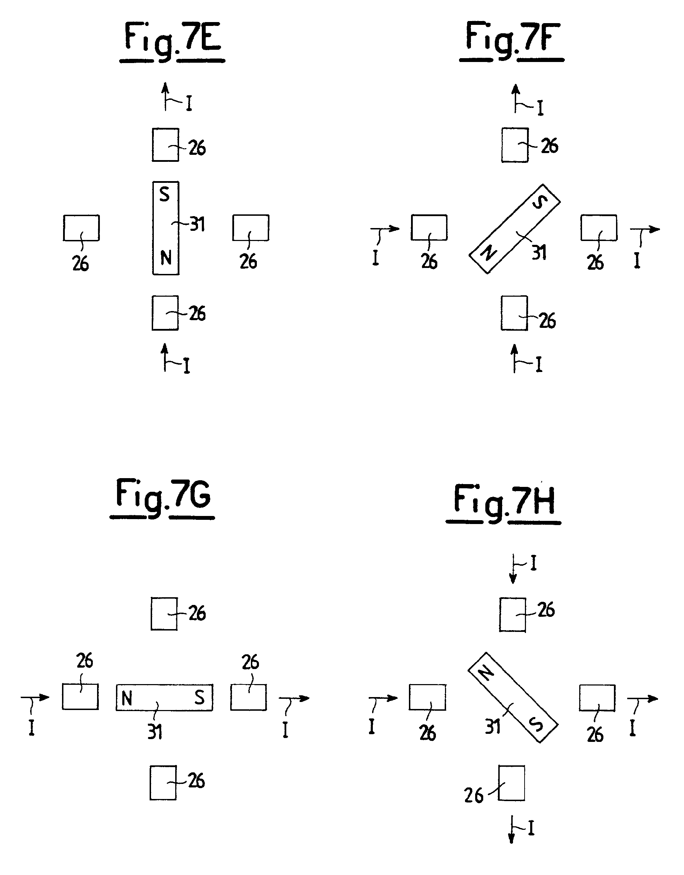

In particular, according to what shown in figures 7A-7H, where there are shown the operating sequences of the device, microprocessor 30 has a continuous control over the current absorbed by coils 26, which are magnetically connected to a permanent magnet 31, provided externally to the device, and it manages their variations in PWM ("Pulse Width Modulation") so as to continuously optimise the time and the supplied power between the steps of the entire operating sequence.

Figures 7A-7H show a preferred but non-limitative example of operation, wherein there is provided the use of four unipolar windings or coils 26, perpendicularly arranged with respect to one another, and a permanent magnet 31 having the barycentre arranged at the centre of the circumference determined by the above coils 26, whereas the arrows referred to with I shows the respectively input/output currents - according to the direction of the arrow, to or from coils 26; it must be noted that, in this case, each of the ordered sequences of transmission and interruption of electric current, which are imparted by microprocessor 30 to each coil 26, causes a clockwise rotation of the permanent magnet 31 by a width equal to π/4 radians and that, thus, the complete rotation of magnet 31 is obtained after eight sequences. This implies, for each winding 26, a conduction for a 45 electrical degrees.

Moreover, the presence of microprocessor 30, integrated in the device, allows having different control methods from the outside (tension analogue, serial, digital, in frequency) for the purpose of imparting the suitable signals to coils 26, whereas it is further possible to obtain a serial or digital output feedback signal in TTL frequency.

Since moving members are not provided, the system is totally static and guarantees a complete absence of any wear phenomenon in time; moreover, a very high switching speed is guaranteed, which - in the case of rotative actuation - even reaches 20000 revolutions/minute. The absolute stability of operation and independence from the applied load also allows obtaining a very high electric efficiency at relatively reasonable price, thanks to the integration of the electronic circuit with the electromechanical part.

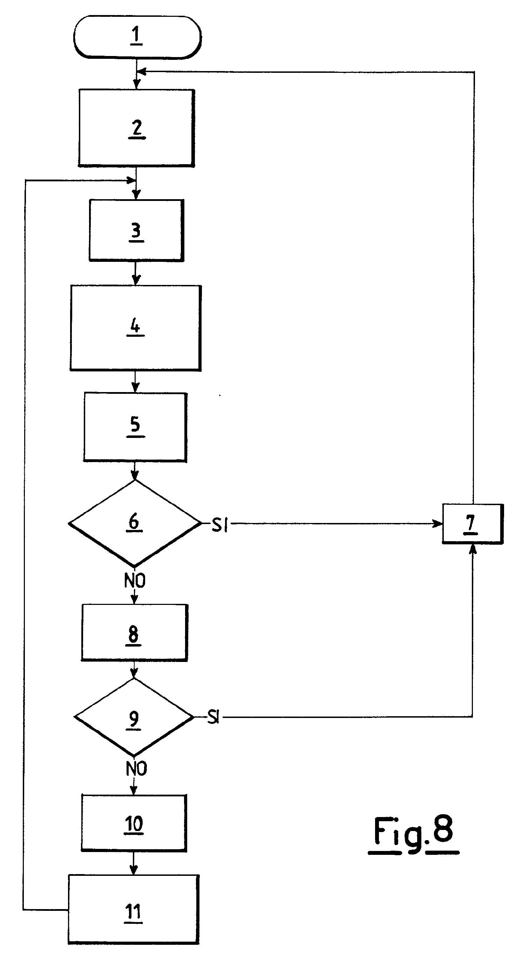

With particular reference to figure 8, where there is shown a flow chart of the operating sequences of an actuation device according to the present invention, reference numeral 1 shows a start-up and power-supply block of the device (typically variable between 13.5 and 28 Volts in direct current), reference numeral 2 shows a system for reading the selection inputs of the external command parameter (frequency signal, tension signal, data received by serial port, data read by digital inputs), reference numeral 3 shows an actual read block of the command parameters, reference numeral 4 shows a system for calculating the pitch period of the device in function of the command parameter, reference numeral 5 shows a read block of the power supply voltage, reference numeral 6 shows a comparison block of said power supply voltage with a threshold fixed at 12 Volts, reference numeral 7 shows a locking system of the device and of the connected motor, in case of a lower power supply voltage than 12 Volts, reference numeral 8 shows a read system of the temperature reached, in case of a higher power supply voltage than 12 Volts, reference numeral 9 shows a comparison block of said temperature value with a threshold value fixed at 130 C, reference numeral 10 shows a read system of the absorbed current, which operates in case the temperature is less than 130 C (otherwise, a motor stop command is given by block 7) and finally, reference numeral 11 shows a block for setting the operating sequence to PWM ("Pulse Width Modulation") in function of the absorbed current; the output signal from block 11 is used as negative feedback signal, and is sent again to the input of the command parameter read block 3.

In this way, the actuation device according to the invention can be applied to any apparatus needing to be mechanically insulated from the motor energy source, thus avoiding the need of checking the operating parameters of the entire system through external feedback sensors; moreover, it is possible to provide their application both for rotatory and for linear movements, in this latter case by using minimum further devices, in se known to the man skilled in the art.

For example, by applying the rotary pump device it is possible to obtain a perfect hydraulic seal of the entire system, since the pump does not need any transmission member and thus, relevant hydraulic seals such as 0-rings, oil retainers, stuffing boxes; moreover, as the mover in turn is not provided with transmission shafts, it can be totally coated with rubber, thus allowing a very high impermeableness degree and a possible immersion of the entire member into fluids, even chemical agents (the application to non-self-priming pumps, submersed pumps and the like is thus possible).

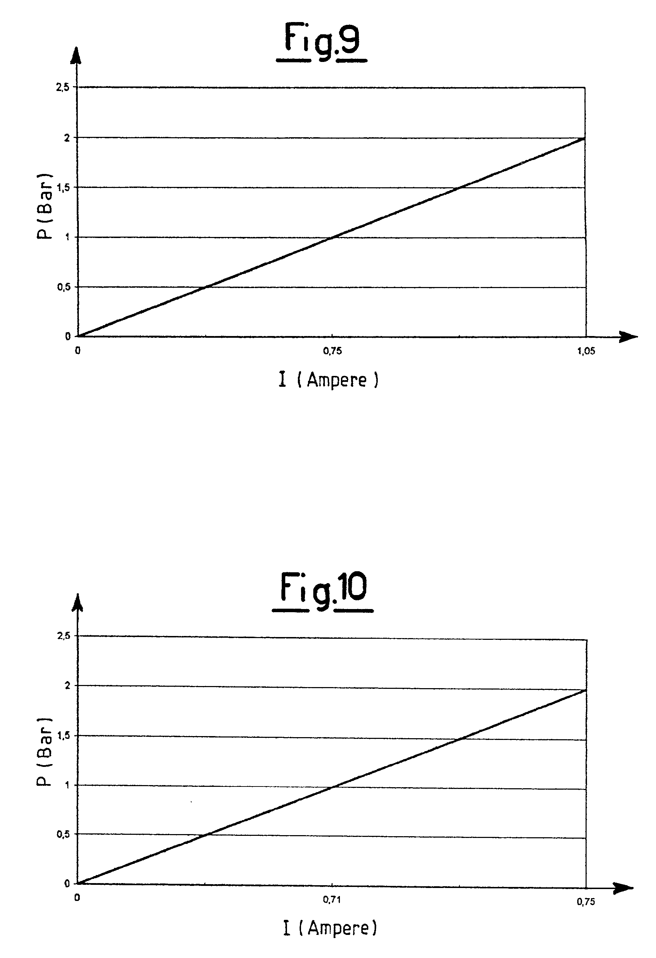

By way of example, figures 9 and 10 show the Cartesian diagrams relating to the pattern of pressure in function of the current absorbed by the system, respectively at 12 and 24 Volts, in case the actuation device according to the invention is connected to a geared rotary pump.

Through suitable programming of microprocessor 30, by using the device on cooling fans it is possible to monitor the temperature of the treated air and thus, increase or decrease the number of revolutions of the fan so as to maintain a constant temperature.

Further applications of the device can be provided by using the capacity of the motor energy source of making the mover rotate at a very high number of revolutions.

For example, in rear window wipers of cars it is possible to obtain a very moderately priced and totally automatic system by using suitable reductions; moreover, the parts can also be made of a plastic material so as to further curb the costs and obtain the necessary energy using the high rotation speed of the motor. Finally, it is possible to reverse the direction of rotation without having to operate any external control, only thanks to the presence of microprocessor 30.

Furthermore, it is possible to realise linear movements for small-bulk industrial applications (for example micro-spindles) or linear peristaltic pumps for hydraulic systems, wherein the deflection of the pipe is directly obtained through the action of the magnets present in the device.

The features of the sequential magnetic field actuation device, which is object of the present invention, as well as its advantages, are clear from the above description.

In particular, they are:
- a totally static system for the absence of moving members;
- consequent absence of wear of such members;
- very high switching speed for both linear and rotative actuations;
- absolute stability of operation and independence from the applied load;
- high electric efficiency;
- reasonable cost, thanks to the integration of electronic components with electromechanical devices.

Finally, it is clear that several variants can be made to the sequential magnetic field actuation device object of the present invention without departing from the novelty principles of the inventive idea, and it is also clear that in the implementation of the invention, materials, shapes and sizes of the illustrated details can be of any type according to the requirements, and the same can be replaced with other technically equivalent details.

## Claims

1. Sequential magnetic field actuation device of the type comprising at least one motor energy source which s connected to at least one actuator member,
**characterised in that** it also comprises a microprocessor electronic circuit (30) adapted to sequentially manage a plurality-- of coils (26), magnetically coupled to a permanent magnet (31) external to said device.

2. Actuation device according to claim 1, **characterised in that** said electronic circuit comprises a microprocessor (30) which has a continuous control over the values of current (I) absorbed by said device, and guarantees variations of said current values (I) so as to obtain predetermined values of time and of power supplied between the pitches of said motor energy source, avoiding at the same time the need of checking the operating parameters through external feedback sensors.

3. Actuation device according to claim 2, **characterised in that** said microprocessor (30) sends command signals to said coils (26) in PWM mode ("Pulse Width Modulation"), in function of the absorbed current values, after having carried out a read of the power supply voltage and of the temperature values, and after having calculated a value of a pitch period in function of at least one command parameter, such as a frequency value, a tension value, data received by serial ports, data received by digital inputs.

4. Actuation device according to claim 3 **characterised in that** said microprocessor (30) provides an output feedback signal which is sent to a system for input reading and selection of said command parameters.

5. Actuation device according to claim 1, **characterised in that** said coils (26) are wound on a plurality of shaped laminations (24), packed with one another and fastened, through fastening means (21), to a card (27) containing said microprocessor electronic circuit (30).

6. Actuation device according to claim 1, **characterised in that** there is provided a connection connector (29) which electrically connects said device with said actuator member.

7. Actuation device according to claim 1, **characterised in that** said coils (26) are present in a number that is multiple of two and in a minimum number of four.

8. Actuation device according to claim 1, **characterised in that** it can be piloted from the outside through tension analogue signals, frequency commands, serial communications or digital commands.

9. Actuation device according to claim 1, **characterised in that** said actuator members comprise cooling members, such as cooling fans for vehicles, rotary pumps, linear peristaltic, small drives such as rear window wipers, industrial automation applications, such as micro-spindles, said members being movable both linearly and in rotative direction, and in both running or rotation directions, and being mechanically sealed and insulated from said motor energy source.
